# EUROPÄISCHE PATENTANMELDUNG

(11) **EP 3 260 758 A1**
(43) Veröffentlichungstag der Anmeldung: **27.12.2017**
(21) Anmeldenummer: 16020440.0
(22) Anmeldetag: 09.11.2016
(51) Int. Cl.: F17C 7/00

(54) **VERFAHREN ZUR BEREITSTELLUNG EINES ÜBERKRITISCHEN MEDIUMS, WIE KOHLENDIOXID, UND HIERFÜR GEEIGNETER VORRATSBEHÄLTER**

(30) Priorität: 23.06.2016 DE 102016007686
(71) Anmelder: Linde Aktiengesellschaft, 80331 München (DE)
(72) Erfinder: Posselt, Heinz, 83043 Bad Aibling (DE)
(74) Vertreter: Gellner, Bernd

(57) **Zusammenfassung**

Die vorliegende Erfindung betrifft ein Verfahren und einen Vorratsbehälter (1) zur Bereitstellung eines Mediums (3) im überkritischen Aggregatzustand, wobei das Medium (3) in einem Vorratsbehälter (1) gespeichert vorliegt und wobei dem Vorratsbehälter (1) ein Gas zugeführt wird, um in dem Vorratsbehälter (1) ein Gaspolster (2) zu bilden, wobei das gebildete Gaspolster (2) das Medium (3) im überkritischen Aggregatszustand aus dem Vorratsbehälter (1) in eine daran angeschlossene Entnahmeleitung (7) überführt.

## Beschreibung

Die Erfindung betrifft ein Verfahren zur Bereitstellung eines überkritischen Mediums, wie Kohlendioxid, und einen hierfür geeigneten Vorratsbehälter.

### Stand der Technik

In der vorliegenden Anmeldung wird stellvertretend für ein überkritisches Medium der Fokus auf überkritisches Kohlendioxid gerichtet, ohne dass dies eine Einschränkung bedeuten soll. Das Beispiel des überkritischen Kohlendioxids dient lediglich der leichteren Veranschaulichung der Erfindung.

Für Kohlendioxid in seinen verschiedenen Aggregatzuständen gibt es vielfältige Einsatzmöglichkeiten. Hierzu zählen beispielsweise die Einstellung des pH-Wertes bei Trink- und Abwasser, der Einsatz als Kältemittel, der Einsatz beim Schweißen (MAG-Schweißen), der Einsatz in Feuerlöschern oder als Treibgas zum Aufschäumen oder in Spraydosen, der Einsatz beim Extrudieren. Überkritisches Kohlendioxid wird insbesondere für die Extraktion (z.B. Entkoffeinierung von Kaffee oder zur Gewinnung von Aroma- und Duftstoffen), zur Reinigung und Entfettung von Elektronikbauteilen, aber auch von Textilien, bei der Trocknung organischer Präparate für die Mikroskopie oder auch für den Austrag von Öl aus Lagerstätten verwendet.

Gasförmiges Kohlendioxid wird in Druckgasflaschen bereitgestellt, in denen das Kohlendioxid unter Druck verflüssigt vorliegt. Die Entnahme erfolgt über eine Druckreduzierung im gasförmigen Zustand.

Flüssiges Kohlendioxid liegt nur in einem Temperaturbereich zwischen -56,6 und +31,0 °C bei Drücken oberhalb 5,18 bar vor. Um flüssiges Kohlendioxid bereit zu stellen, kommen sogenannte Steigrohrflaschen zum Einsatz. In einer solchen Flasche ist ein Steigrohr kurz über den Boden montiert. Mit Hilfe eines Gaspolsters (z.B. durch Zuleitung von Helium) kann das flüssige Kohlendioxid aus der Flasche entgegen der Schwerkraft durch das Steigrohr bzw. durch die Tauchentnahmeleitung gefördert und mit dem erforderlichen Arbeitsdruck bereit gestellt werden. Hintergrund ist die geringe Kompressibilität von Kohlendioxid, die eine Entnahme vergleichbar zu der eines Gases aus einer Gasflasche verhindert.

Überkritisches Kohlendioxid entsteht, wenn Druck und Temperatur über dem kritischen Punkt liegen, also ab einer Temperatur von + 31,0 °C und ab einem Druck von 73,75 bar. In diesem Zustand hat Kohlendioxid etwa die Dichte einer Flüssigkeit, aber die Viskosität eines Gases. Zur Bereitstellung großer Mengen von überkritischem Kohlendioxid innerhalb kurzer Zeit wird das Kohlendioxid bei einem erhöhten Druck (beispielsweise bei 400 bar) gespeichert. Es strömt dann so lange aus dem Vorratsbehälter, bis der Bereitstellungsdruck in dem Vorratsbehälter auf den Bereitstellungsdruck für die entsprechende Anwendung (z.B. 300 bar) gesunken ist. Da die Kompressibilität von überkritischem Kohlendioxid sehr gering ist, muss das Volumen des Vorratsbehälters entsprechend groß sein. Dies verursacht erhebliche Investitionskosten.

Es ist wünschenswert, die Bereitstellung von überkritischem Kohlendioxid, allgemeiner eines überkritischen Mediums, einfacher und bei geringeren Investitionskosten zu gestallten.

### Offenbarung der Erfindung

Erfindungsgemäß wird ein Verfahren zur Bereitstellung eines überkritischen Mediums, wie Kohlendioxid, und ein hierfür geeigneter Vorratsbehälter gemäß den Merkmalen der unabhängigen Patentansprüche vorgeschlagen. Vorteilhafte Ausgestaltung sind Gegenstand der jeweiligen Unteransprüche sowie der jeweiligen nachfolgenden Beschreibung.

Bei dem erfindungsgemäßen Verfahren zur Bereitstellung eines Mediums im überkritischen Aggregatzustand, bei dem das Medium in einem Vorratsbehälter gespeichert vorliegt, wird dem Vorratsbehälter ein Gas zugeführt, um in dem Vorratsbehälter ein Gaspolster zu bilden. Das derart gebildete Gaspolster führt das Medium im überkritischen Aggregatzustand aus dem Vorratsbehälter in eine daran angeschlossene Entnahmeleitung über. Über diese Entnahmeleitung kann das überkritische Medium einem Verbraucher bereitgestellt werden.

Es hat sich überraschender Weise gezeigt, dass zur Bereitstellung eines Mediums wie überkritisches Kohlendioxid ein ähnliches Verfahren eingesetzt werden kann wie zur Bereitstellung von flüssigem Kohlendioxid. Die bisher eingesetzten großen Vorratsbehälter zur Bereitstellung großer Mengen von überkritischem Kohlendioxid sind somit bei der Erfindung nicht notwendig. Vielmehr können Vorratsbehälter verwendet werden, die in Form und Volumen den zur Bereitstellung flüssigen Kohlendioxids verwendeten Flaschen gleichen. Wie weiter unten erläutert, ist jedoch das Vorsehen eines Steigrohrs bzw. einer Tauchentnahmeleitung bei großen Entnahmevolumina nicht notwendig. Die Erfindung kann auf diese Weise die Bereitstellung eines Mediums im überkritischen Aggregatzustand erheblich erleichtern und die Investitionskosten stark senken.

### Vorteile der Erfindung

Die Erfindung hat sich insbesondere bei Verwendung von Kohlendioxid als Medium als besonders vorteilhaft erwiesen. Als Gas für das gebildete Gaspolster wird mit Vorteil Helium oder ein heliumhaltiges Gas eingesetzt. Grundsätzlich können andere leichte Gase, wie Wasserstoff (H2) oder Neon (Ne), auch in Mischung, für das gebildete Gaspolster verwendet werden, wobei das Medium ein schwereres Fluid, wie beispielsweise Methan (CH4) oder Ethan (C2H6) neben oder zusätzlich zu dem bereits erwähnten Kohlendioxid (CO2) darstellen kann. Das für das zu bildende Gaspolster verwendete Gas kann im Rahmen dieser Anmeldung als auch Druckaufbaumedium bezeichnet werden. Je thermodynamisch idealer dieses Druckaufbaumedium ist, desto kleiner sind die benötigten Volumina.

Aufgrund der großen Dichteunterschiede zwischen dem zugeführten Gas (beispielsweise Helium) und dem überkritischen Medium (beispielsweise Kohlendioxid), dessen Dichte derjenigen einer Flüssigkeit sehr nahe kommt, entsteht eine stabile Schichtung im Schwerefeld. Das Gaspolster wird mit ausreichend hohem Druck (beispielsweise 450 bar, wenn der Abgabedruck 300 bar beträgt) dem Vorratsbehälter zugeführt und das dabei gebildete Gaspolster drückt das Medium im überkritischen Aggregatzustand in die angeschlossene Entnahmeleitung, sofern diese für den Durchfluss geöffnet ist, solange bis der Druck des Gaspolsters auf den Abgabedruck gesunken ist. Aufgrund der stabilen Schichtung im Schwerefeld kommt es nicht zu einer Durchmischung von Medium und Gaspolster. Eine Durchmischung aufgrund von Diffusion kann darüber hinaus gering gehalten werden, wenn die Grenzfläche zwischen Gaspolster und gespeichertem Medium klein gegenüber den Volumina des Gaspolsters bzw. des gespeichertem Medium ist. Mit anderen Worten ist es folglich vorteilhaft, einen Vorratsbehälter zu verwenden, bei dem der Durchmesser der Grenzfläche des Gaspolsters zum gespeicherten Medium während der Bereitstellung dieses Mediums im überkritischen Aggregatzustand kleiner ist als die jeweilige Füllhöhe des gespeicherten Mediums und/oder des Gaspolsters (z. B. sind stehende jeweilige lange Zylinder als Vorratsbehälter geeignet). Mit zunehmendem Druck steigt zwar im Allgemeinen die maximale Löslichkeit der beiden Medien ineinander, allerdings nimmt auf der anderen Seite die Diffusionskonstante ab, so dass im Ergebnis insbesondere bei hohen Drücken die Verunreinigungsfront, d. h. der Durchmischungsbereich während der Entnahme nur sehr langsam in das Medium fortschreitet.

Zur Verhinderung einer Durchmischung des Druckaufbaumediums/Gaspolsters und dem überkritisch bereitzustellenden Medium ist ein ausreichend hoher Dichteunterschied wichtig. Der Druckaufbau kann allgemein "von oben" im Inneren des Vorratsbehälters erfolgen oder "von unten". Beim Druckaufbau "von oben" muss die Geschwindigkeit des einströmenden Druckaufbaumediums im Bereich der Grenzfläche zwischen den beiden Medien so gering sein, dass keine strömungsinduzierte Vermischung der beiden Medien auftritt. Der Druckaufbau muss deshalb sehr langsam erfolgen, insbesondere kann die Strömung des Druckaufbaumediums beispielsweise mittels eines Prallblechs oder eines porösen Stopfens beruhigt werden.

Alternativ kann zur weiteren Absenkung der Vermischungsrate das Medium aus der Flüssigphase mit Hilfe eines Flüssig-Kompressors "von unten" gegen ein geschlossenes Gaspolster-Volumen gepumpt und somit "aufgedrückt" werden.

Das überkritisch bereitzustellende Medium kann vor der Druckbeaufschlagung mit dem Gaspolster ein- oder zweiphasig, also flüssig oder flüssig/gasförmig, vorliegen. Die Reinheit des überkritisch bereitgestellten Mediums wird im letzteren Fall etwas geringer sein, da eine Durchmischung des noch vorhandenen Gasanteils des Mediums und des gasförmigen Druckaufbaumediums nicht zu verhindern sein wird.

Prinzipiell ist es möglich, zur erfindungsgemäßen Bereitstellung eines Mediums im überkritischen Aggregatzustand eine bekannte Steigrohrflasche zu verwenden. Typisch wäre hier eine Standard-50-Liter-Flasche. Vorteilhafter Weise kann jedoch auf ein Steigrohr bzw. eine Tauchentnahmeleitung verzichtet werden. Hierzu ist darauf zu achten, dass die vorhandene stabile Schichtung von Gaspolster und gespeichertem Medium auch während der Bereitstellung des Mediums, also während des Ausströmens beibehalten wird und eine Durchmischung während des Ausströmens durch Wirbelbildung vermieden wird. Hierzu können vorteilhafterweise in dem Vorratsbehälter sich axial erstreckende Leit- oder Trennflächen eingebaut sein. Diese Leit- oder Trennflächen können insbesondere eine Wabenstruktur (dünnwandige Wabenkammern) bilden. Hierbei ist es vorteilhaft, wenn ein Vorratsbehälter verwendet wird, bei dem die Entnahmeleitung direkt in einem Bodenbereichs des Vorratsbehälters angeschlossen ist und von dort aus aus dem Vorratsbehälter hinausführt. Somit wird beispielsweise überkritisches Kohlendioxid unmittelbar aus dem Bodenbereich des Vorratsbehälters entnommen und muss nicht über ein Steigrohr in den Kopfbereich des Vorratsbehälters geführt werden. Dies erlaubt eine einfachere Konstruktion des Vorratsbehälters und vermeidet überdies zu kompensierende Druckabfälle.

Es ist vorteilhaft, wenn die genannte dünnwandige Wabenstruktur aus einem wärmeleitenden Material, wie C-Stahl, Aluminium und/ oder Kupfer, gefertigt ist. Eine derartige metallische Wabenstruktur wirkt sich positiv auf einen Temperaturausgleich im Inneren des Vorratsbehälters aus. Insbesondere bei einem sehr schnellen Bereitstellen mit überkritischem Medium ist eine metallische gut wärmeleitende Wabenstruktur günstig.

In diesem Zusammenhang sei darauf hingewiesen, dass die im Zusammenhang mit dem erfindungsgemäßen Verfahren erläuterten Merkmale und Vorteile in analoger Weise für den erfindungsgemäßen Vorratsbehälter zur Bereitstellung eines überkritischen Mediums gelten.

Es hat sich gezeigt, dass durch die Erfindung die Investitionskosten für das Behältervolumen sich um fast eine Größenordnung reduzieren lassen, insbesondere wenn kurzfristig sehr große Massenströme von überkritischem Kohlendioxid bereit gestellt werden sollen.

Weitere Vorteile und Ausgestaltungen der Erfindung ergeben sich aus der Beschreibung und der beiliegenden Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispieles in der Zeichnung schematisch dargestellt und wird im Folgenden unter Bezugnahme auf die Zeichnung beschrieben.

### Figurenbeschreibung

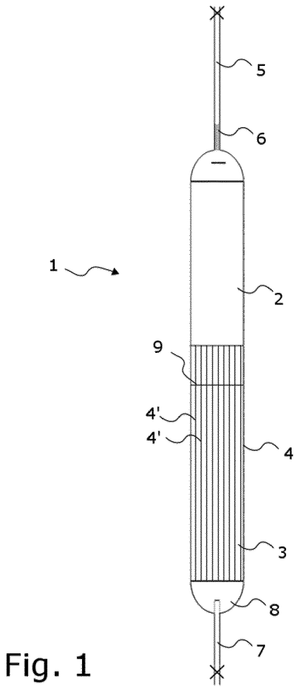

Figur 1 zeigt schematisch eine Ausführungsform einer erfindungsgemäßen Vorratsbehälters zur Bereitstellung von überkritischem Kohlendioxid mit seinen wesentlichen Komponenten.

Der Vorratsbehälter 1 ist ein an sich bekannter Druckbehälter, insbesondere ein senkrecht stehender langer Zylinder. Er weist eine Zuleitungsleitung 5 für ein Gas und eine Entnahmeleitung 7 zur Entnahme eines überkritischen Mediums auf. Als Gas wird in diesem Ausführungsbeispiel Helium eingesetzt, als überkritisches Medium CO2. Weiterhin weist der Vorratsbehälter in seinem Inneren axial verlaufende Trenn- oder Leitflächen 4' auf. Es handelt sich um dünnwandige Leitbleche 4', die zumindest im unteren Teil des Vorratsbehälters 1 eine dünnwandige Wabenstruktur 4 bilden. Diese Wabenstruktur 4 verhindert eine Verwirbelung des Kohlendioxids in transversaler Richtung. Hierdurch wird effektiv eine Durchmischung von Medium (Kohlendioxid) und Gaspolster (Helium) während der Bereitstellung des überkritischen Mediums verhindert.

Das Kohlendioxid liegt im Vorratsbehälter 1 insbesondere flüssig vor. Über die Zuleitungsleitung 5 wird Helium bei einem Druck insbesondere zwischen 400 und 450 bar in den oberen Teil des Vorratsbehälters 1 eingeleitet. Am Ende der Zuleitungsleitung 5 ist ein poröser Stopfen oder ein Prallblech 6 vorhanden, um den Druckaufbau im Inneren des Vorratsbehälters 1 langsam vorzunehmen, um Turbulenzen und eine daraus resultierende Durchmischung von Gas 2 und Medium 3 weitgehend zu vermeiden.

Figur 1 zeigt den Zustand während der Bereitstellung mit überkritischem Kohlendioxid. Das Gaspolster 2 nimmt bereits etwas mehr als die Hälfte des Volumens des Vorratsbehälters 1 ein. Die Grenzfläche zum Kohlendioxid ist mit 9 bezeichnet. Bei dem hier dargestellten Vorratsbehälter 1 ist der Durchmesser der Grenzflächen 9 während der Bereitstellung mit überkritischem Kohlendioxid immer kleiner als die jeweilige Füllhöhe des gespeicherten Kohlendioxids 3 und des Gaspolsters 2. Sobald diese Bedingung nicht mehr erfüllt ist, kann es zu einer verstärkten Durchmischung der beiden Medien kommen.

Im Bodenbereich 8 des Vorratsbehälters 1 ist eine Entnahmeleitung 7 an den Vorratsbehälter 1 angebracht. Die Entnahmeleitung 7 kann alternativ zu dem in Figur 1 dargestellten Fall auch seitlich, also horizontal aus dem Bodenbereich 8 herausführen. Der Abgabedruck des aus der Entnahmeleitung 7 entnommenen überkritischen Kohlendioxids beträgt etwa 300 bar. Solange der Druck des Gaspolsters 2 über 300 bar liegt, kann überkritisches CO2 entnommen werden.

### Bezugszeichenliste

- 1: Vorratsbehälter, Druckbehälter
- 2: Gaspolster
- 3: Medium
- 4: Wabenkammern
- 4': Leitblech
- 5: Zuleitungsleitung
- 6: Poröser Stopfen, Prallblech
- 7: Entnahmeleitung
- 8: Bodenbereich
- 9: Grenzfläche

## Patentansprüche

1. Verfahren zur Bereitstellung eines Mediums (3) im überkritischen Aggregatzustand, wobei das Medium (3) in einem Vorratsbehälter (1) gespeichert vorliegt und wobei dem Vorratsbehälter (1) ein Gas zugeführt wird, um in dem Vorratsbehälter (1) ein Gaspolster (2) zu bilden, wobei das gebildete Gaspolster (2) das Medium (3) im überkritischen Aggregatzustand aus dem Vorratsbehälter (1) in eine daran angeschlossene Entnahmeleitung (7) überführt.

2. Verfahren nach Anspruch 1, wobei als Medium (3) Kohlendioxid verwendet wird.

3. Verfahren nach Anspruch 1 oder 2, wobei als Gas für das Gaspolster (2) Helium oder heliumhaltiges Gas verwendet wird.

4. Verfahren nach einen der Ansprüche 1 bis 3, wobei ein Vorratsbehälter (1) verwendet wird, bei dem die Entnahmeleitung (7) direkt in einem Bodenbereich (8) des Vorratsbehälters (1) angeschlossen ist und von dort aus dem Vorratsbehälter (1) hinaus führt.

5. Verfahren nach einem der vorangehenden Ansprüche, wobei ein Vorratsbehälter (1) verwendet wird, bei dem der Durchmesser einer Grenzfläche (9) des Gaspolsters (2) zum gespeicherten Medium (3) während der Bereitstellung kleiner ist als die jeweilige Füllhöhe des gespeicherten Mediums (3) und/oder des Gaspolsters (2).

6. Verfahren nach einem der vorangehenden Ansprüche, wobei ein senkrecht stehender Vorratsbehälter (1) verwendet wird und wobei das Gaspolster (2) im oberen Teil des Vorratsbehälters (1) gebildet wird.

7. Vorratsbehälter (1) zur Bereitstellung eines Mediums (3) im überkritischen Aggregatzustand mit einer Zuleitungsleitung (5), die zur Zuleitung eines ein Gaspolster (2) bildenden Gases ausgebildet ist, und mit einer Entnahmeleitung (7), die zur Entnahme eines in dem Vorratsbehälter (1) gespeicherten Mediums (3) im überkritischen Aggregatzustand aus dem Vorratsbehälter (1) ausgestaltet ist.

8. Vorratsbehälter (1) nach Anspruch 7, bei dem die Entnahmeleitung (7) direkt in einem Bodenbereich (8) des Vorratsbehälters (1) angeschlossen ist und von dort aus aus dem Vorratsbehälter (1) hinausführt.

9. Vorratsbehälter (1) nach Anspruch 7 oder 8, wobei der Grundkörper des Vorratsbehälters (1) ein langer Druckzylinder ist.

10. Vorratsbehälter (1) nach einem der Ansprüche 7 bis 9, bei dem der Durchmesser einer Grenzfläche (9) des Gaspolsters (2) zum gespeichertem Medium (3) während der Bereitstellung mit überkritischem Medium (3) kleiner ist als die jeweilige Füllhöhe des gespeicherten Mediums (3) und/ oder des Gaspolsters (2).

11. Vorratsbehälter (1) nach einem der Ansprüche 7 bis 10, bei dem zumindest zum Teil in seinem Inneren axial verlaufende Leit- oder Trennflächen (4') vorhanden sind.

12. Vorratsbehälter (1) nach Anspruch 11, bei dem die Leit- oder Trennflächen (4') metallisch sind.

13. Vorratsbehälter (1) nach Anspruch 11 oder 12, bei dem die Leit- oder Trennflächen (4') eine Wabenkammer oder Wabenstruktur (4) bilden.

14. Vorratsbehälter (1) nach einem der Ansprüche 7 bis 13, bei dem in der Zuleitungsleitung (5) des Vorratsbehälters (1) ein poröser Stopfen oder ein Prallblech (6) angeordnet ist.
